# EUROPEAN PATENT SPECIFICATION

(11) **EP 2 112 408 B1**
(45) Date of publication and mention of the grant of the patent: **21.12.2011**
(21) Application number: 08155033.7
(22) Date of filing: 23.04.2008
(51) Int. Cl.: F16H 61/24, F16H 61/18, F16H 59/04

(54) **Shift-by-wire gearshift assembly**
Shift-by-Wire-Schaltanordnung
Ensemble de levier de vitesses de type "shift-by-wire"

(43) Date of publication of application: 28.10.2009
(73) Proprietor: Fico Triad S.A., 08100 Mollet del Vallès Barcelona (ES)
(72) Inventor: Dominguis Botella, Marc, 98790 Gelida (Barcelona) (ES); Batllori Morillo, Albert, 08191 Rubí (Barcelona) (ES); Álvarez Gómez, José María, 08130 Santa Perpetua de Mogoda (Barcelona) (ES)
(74) Representative: ZBM Patents

(56) References cited:
- EP-A- 1 571 377
- EP-A- 1 752 688
- GB-A- 1 350 073
- US-A- 4 912 997
- US-B1- 6 209 408

## Description

### Field of the invention

The present invention relates to a shift-by-wire gearshift assembly that provides a smart force feedback human machine interface capable of real time suggesting a user about the more suitable gearshift operation according to circumstances.

The gearshift assembly of the invention comprises a gearshift lever suitable for being operated by the user for remotely controlling a motor vehicle transmission as well as biasing means adapted to impart a force on the gearshift lever against a contoured surface for providing the user with information relating to shifting operation.

### BACKGROUND ART

Shift-by-wire transmission systems in which a gearshift lever commands the transmission system of a motor vehicle through an electronic link are currently known and widely used. Such systems are provided with detection means for informing a control unit about a user's requested gearshift. Such a request is processed by the control unit and a command signal is sent for actuating the clutch and the gear sequence according to such driver's request. Feeling means are further provided comprising biasing means acting on a follower member so that it is in contact with a contoured surface for providing the driver with the desired shift feeling as if it is a mechanical shifting device.

As used herein, "user" refers to a person using (operating) the gearshift assembly, usually a vehicle's driver. The term "unsuitable" as used herein, stands for a gearshift operation that is considered by the assembly of being unsafe, risky or non-optimum, that is, a gearshift operation which would involve a misuse, for a given condition, according to an user profile, way of driving, etc. Examples of unsuitable gearshift operations are given hereinbelow.

In manually driven electronic systems it is easy for the user to misuse the gearshift system which may adversely affect the service life, durability and safety of the vehicle transmission key parts, such as silent-blocks, gear synchronizing parts, etc. The user has the whole control on the use or misuse of the gearshift system. An example of a misuse is shifting into reverse gear when driving at high speed, such as for example in fourth or fifth gear. While in fully manual transmission systems this is nearly impossible due to the mechanical configuration itself, in manually driven electronic systems an unsuitable operation could be allowed to be performed by the user which could result in serious problems for the vehicle gearbox system.

Several solutions have been provided by the prior art for informing or alerting the user who operates a manually driven electronic system that an operation detected to be unsuitable is about to be performed. For example, WO2005019702 discloses a manual transmission control apparatus for motor vehicles in which two or more selectable shift positions of a gearshift lever can be varied based e.g. on the gearshift lever position. The apparatus includes a guide section which allows a gearshift operation along a given gearshift path, assigned a high selection priority, to be performed with ease when the lever is to be shifted to a desired one of the shift positions; and a reactive force actuator for imparting a reactive force to the shifting movement of the shift lever. When the transmission shift lever is to be shifted in accordance with the shift pattern, the gearshift paths for guiding the gearshift lever are prioritized such that any of the shift paths having a high selection priority is varied in shape as gates, and thus a given reactive or restrictive force is produced.

A further solution is disclosed in JP9324855 which shows a shift by wire gearshift device in which a gearshift lever is provided with a lower tip that in use is always in contact by a contoured surface by the action of a detent spring. The device acts such that if the user operates the gearshift lever to reverse position sides by the reaction of a further spring and there is a down or up input after the lever has been temporarily operated on an up position side or a down position side, an input signal by these reaction can be canceled. Wrong execution of gearshift control can be therefore prevented.

In FR2796116 a gearshift control means is provided for receiving inputs from sensors and that is capable of providing a resistive force by electric motors which the driver must overcome during gear selection. The control means even may cause a gearshift blocking.

US 4,912,997 discloses a gearshift assembly according to the preamble of claim 1.

As a further example, GB1350073 discloses a gearshift assembly comprising a gearshift lever for controlling a motor vehicle transmission. Springs are provided for imparting a force to the gearshift lever on a contoured surface for providing the user with haptic information relating to shifting operation.

None of the above prior art solutions makes use of variable load spring means for providing the user with information concerning the gear shift operation that is about to be performed and suggesting the user the most suitable operation according to driving and other conditions.

The present invention provides a simple and effective system for providing the user with a real time indication or suggestion about the most suitable shifting operation to perform.

### SUMMARY OF THE INVENTION

As stated above, the shift-by-wire gearshift assembly of the present invention is particularly suitable for manually driven electronic gearshift systems and provides an active assembly that is capable of real time suggesting the user about the optimum or most suitable gearshift operation which can be performed.

The gearshift lever, typically provided for manually and remotely controlling the electronic motor vehicle transmission, has a lower tip adapted to be in contact against a contoured surface. This provides the user with haptic information relating to shifting operation. The lever tip movement onto the contoured surface provides a gear shifting feeling as if it was a mechanical gearshift system. For this purpose, biasing means are provided suitable for imparting a force on the gearshift lever tip against the above mentioned contoured surface.

According to the invention, the force imparted by the biasing means to the gearshift lever can be varied depending upon the circumstances. For this purpose, the system of the invention is provided with at least one actuation means that may be preferably received inside the gearshift lever or arranged at least substantially parallel thereto. The actuation means are adapted for varying the force imparted by the biasing means to the gearshift lever from any gearshift lever position. Said force imparted by the biasing means to the gearshift lever can be suitably varied in such a way that the haptic information provided to the user can be different according to the circumstances.

More particularly, the force imparted by the biasing means to the gearshift lever may be varied by the actuation means preferably in an adjustable manner. From any gearshift lever position, a gear can be:
- allowed to be shifted;
- at least substantially hard to be shifted; or
- prevented from being shifted (blocked).

In this way, the user is suggested at every time about the most suitable gear according to conditions and warned when an unsuitable operation is about to be performed. Damages, breackages, failures, etc are thus prevented to occur with the gearshift assembly of the invention.

According to the invention, the biasing means include at least one first spring arranged between two axially arranged portions of the lever. Variation of the force imparted to the gearshift lever is thus carried out by varying the first spring load through the actuation means. The assembly of the invention has thus the ability to vary the first spring load and therefore the resisting force on the gearshift lever for suggesting the driver about the more suitable gear in each situation for each gearshift operation.

In one embodiment of the shift-by-wire gearshift assembly, it may further include control means for sensing and processing an user gearshift intention and determining, from said sensed intention, whether the operation to be performed through the gearshift lever is to be allowed or otherwise inform the user about an unsuitable operation by acting through the actuation means on the gearshift lever for varying the force imparted thereto against the contoured surface such that the shifting operation is blocked or at least hard to perform, depending on the circumstances, a user's profile, etc.

The control means may comprise a transmission control unit (TCU) and sensing means for real time detecting magnetic field changes and therefore the gearshift lever position at every time. This makes possible detecting the user's intentions and according to environmental and dynamic vehicle conditions, a command can be output by said TCU for allowing, blocking or making the shifting operation harder to perform so that the user is informed about her/his gearshift decision or suggested about the most suitable gearshift operation.

The TCU may be provided with several preset spring loads for each gearshift operation depending on the type of driving or other conditions. This can be set by the user, e.g. through means for real time varying the first spring load or a user profile stored on a card.

The assembly of the invention has thus the ability to vary the first spring load and therefore the resisting force on the gearshift lever for suggesting the driver about the more suitable gear in each situation for each gearshift operation.

In the event the user desires to shift into a gear considered by the assembly to be unsuitable but however he/she still wants to do it so, that operation considered as unsuitable can only be performed by the user by applying a force greater than a nominal value to the gearshift lever in which case such an unsuitable gear shift operation would be allowed. This extra-force exerted by the user in that abnormal situation overcomes the force exerted by the first spring. A second spring (referred to as "fuse means") then starts acting against said user's extra-force. This fuse means (second spring) forms part of the above mentioned biasing means and has a higher spring constant than that of the first spring. The second spring may be provided, for example, around the first spring.

The assembly of the invention is capable of continuously detecting at all times the gearshift lever position for determining the user's intentions and electronically transmitting the information to the TCU to give the user's with the appropriate suggestions about the most suitable shifting operation to be carried out for the present circumstances creating a different shifting feeling to the user for each operation.

As stated above, at least one actuation means is provided for varying the first spring load. Said actuation means may comprise, for example, a worm screw and motor means, such as a DC electric motor, for rotating said worm screw thus causing the first spring load to be varied. The force imparted by the biasing means to the gearshift lever is varied by the actuation means such that the shifting operation is harder to perform or even blocked when an unsuitable user's intention is detected.

The assembly of the invention may further comprise haptic means cooperating with the actuation means. The haptic means are adapted for informing the user that an unsuitable shifting operation is intended to be carried out. Said haptic means may comprise force feedback means and may be provided with the same actuation means. Haptic signals can be sent, for example, to the lever knob in the form of, for example, vibrations. The haptic information provided to the user may be modeled according to the type of driving, through means for real time adjusting the first spring load (e.g. a selector switch), or according to a user profile which may be stored on a card.

A simple yet effective smart gearshift assembly is provided which is particularly suitable for manually driven electronic gearshift systems and capable of real time suggesting the user about the optimum shifting operation which can be performed preventing the user from bringing the gearshift lever to a position that has been considered to be unsuitable.

In addition, the gearshift assembly of the present invention can be used with any gearshift automatic/manual pattern. The invention can be also used both for monostable gear position systems (in which gear is always returned to a preset position) and multistable gear position systems (in which it is stable in multiple positions).

A further advantage of the assembly of the invention is that a simple and cost effective assembly (both from a mechanical and electronic point of view) that is less bulky and heavy is provided. Furthermore, the assembly of the invention can be fitted in standard gearshift assemblies with no significant changes. On the other hand, the gearshift assembly of the invention works based on spring means such that the actuation means (i.e. the motor means) is not an active portion of the assembly as in other prior art solutions. Even if the user acts against the gearshift assembly for overcoming blocked gear position, the user's action is against said spring means and not to a mechanical part thereof which can be liable for being broken off.

### BRIEF DESCRIPTION OF THE DRAWINGS

A particular embodiment of shift-by-wire gearshift assembly according to the present invention will be described in the following, only by way of nonlimiting example, with reference to the appended drawings, in which:
Figs.1 and 2 are side and front elevational views of one embodiment of a shift-by-wire gearshift assembly according to the invention, respectively;
Figs.3 and 4 are side and front cross-sectional views of the embodiment the shift-by-wire gearshift assembly in Figs. 1 and 2, respectively, with Fig. 3 being taken along line BB in Fig. 2 and with Fig. 4 being taken along line AA in Fig. 1.

### DETAILED DESCRIPTION OF PARTICULAR EMBODIMENTS

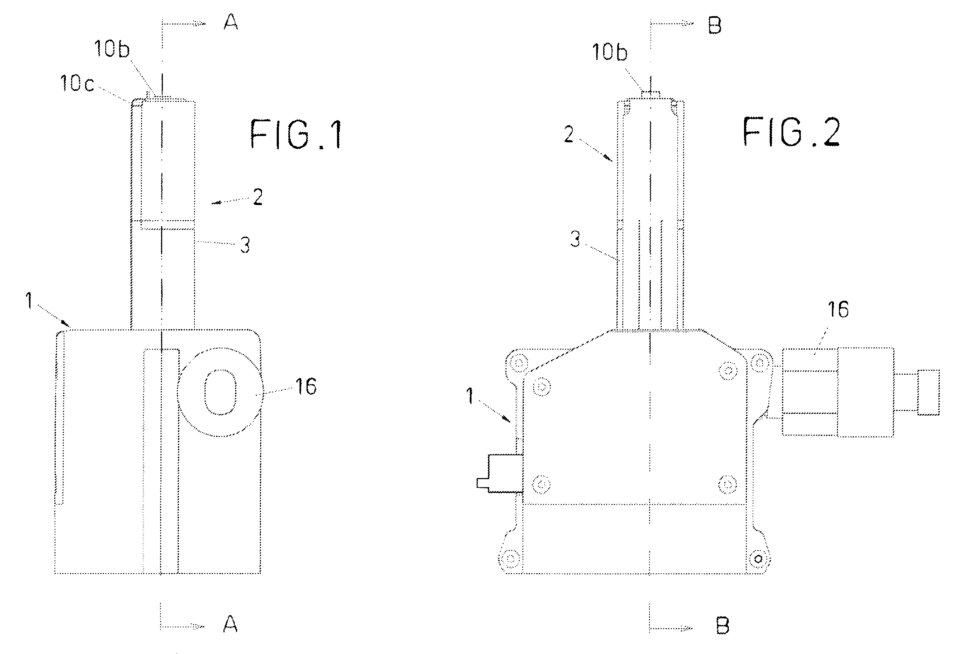

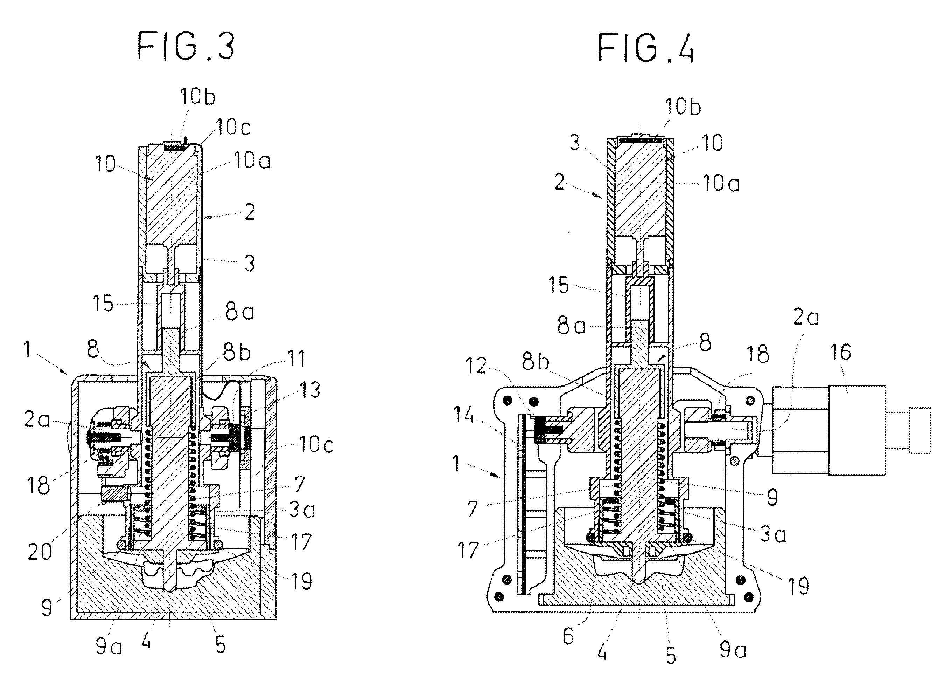

One example of a shift-by-wire gearshift assembly is shown by way of a non limiting example in figs. 1-4 which is particularly suitable for manually driven automatic transmissions. The assembly comprises a main housing 1 partially receiving a gearshift lever indicated as a whole with reference numeral 2. The gearshift lever 2, which makes possible the electronic motor vehicle transmission to be manually and remotely controlled, has a tubular, hollow lever body 3, a lower subassembly 3a and a lower tip 4 formed at the lower end of a shaft 9 fitted inside the lower lever subassembly 3a, as shown in Figs. 3-4. The tip 4 of the gearshift lever 2 is a solid body adapted to be always in contact on a contoured surface 5 that is formed at the lower portion inside the housing 1. The lower lever subassembly 3a is provided with a elastomeric o-ring 19 that provides a soft stop.

The contoured surface 5 may be any suitable surface, for example, a 3D-relief surface, a non-flat or irregular surface having uneven grooves or channels 6 (Fig. 4) on which the gearshift lever tip 4 passes. This provides the user with a shifting feeling as the lever 2 is operated. The movement of the lever tip 4 on said surface 5 provides the user with haptic information relating to shifting operation. The lever tip movement onto the contoured surface 5 provides a gear shifting feeling as if it was a mechanical gearshift system.

Biasing means are provided for imparting a downward force on the gearshift lever tip 4 on the contoured surface 5, as shown in said Figs. 3-4. Said biasing means include a first compression spring 7 that is arranged between a first and a second axially arranged portions 8, 9 of the gearshift lever 2, more particularly surrounding the shaft 9. The first portion 8 of the lever corresponds to a hollow worm screw having an upper portion 8a provided with an outer threading for being received into a spindle 15 of one actuation means 10 that, in turn, is provided with an inner threading. The hollow worm screw 8 is further provided with a hollow lower portion 8b for receiving the upper portion of said second portion, i.e. the shaft 9, of the lever. This second portion or shaft 9 is provided with an outwardly projecting lower portion 9a (Figs. 3-4) such that the first compression spring 7 acts on the lower portion 9a of the shaft 9 as well as on the lower end of the gearshift lever first portion 8.

The first compression spring 7 imparts a force such that the lever tip 4 is continuously brought into contact on the contoured surface 5. The force imparted by the first spring 7 to the gearshift lever 2 can be varied depending upon the circumstances, as explained below.

As stated above, one actuation means 10 (Figs. 3-4) is provided. However several actuation means 10 could be arranged associated with the shift-by-wire gearshift assembly of the invention. The actuation means 10 are received inside the hollow body 3 of the gearshift lever 2. It will be understood that a more than one actuation means 10 fitted inside the hollow body 3 of the gearshift lever 2, or even at least substantially parallel to the gearshift lever 2, may also be provided. The actuation means 10 may comprise a DC electric motor 10a and other electric components such as an encoder 10b and a communications bus 10c. Other components such as a reverse backup solenoid 16 are further provided. This backup solenoid 16 is for assuring a reverse gear blocking function in case of system failure.

The motor 10a is suitable for rotating a spindle 15 that is provided with an inner treaded portion for threadingly receive the outer treaded portion of the above mentioned worm screw 8. Rotation of the spindle 15 by the motor 10a of the actuation means 10 causes de axial displacement of the worm screw 8 inside the hollow lever body 3 and therefore the first spring load to be varied in an adjustable manner. This may involve that a gear can be at least substantially prevented from being shifted (even blocked) or allowed to be shifted or at least substantially hard to be shifted. The assembly is therefore capable of providing the user with variable haptic information from any gearshift lever position according to the circumstances. The user is suggested at every time about the most suitable gear according to conditions and warned when an unsuitable operation is about to be performed.

In the embodiments shown, the biasing means further comprise a second spring 17 (Figs. 3-4) having a higher spring constant than that of the first spring 7 and arranged around the first spring 7. This second spring 17 (referred herein to as "fuse means") will start acting when the biasing force of the first spring 7 is overcome and an extra-force is exerted by the user who desires to shift into such an unsuitable gear.

In this respect, when a user's unsuitable gearshift intention is detected by a control means (not shown), such gearshift operation tends to be blocked in real time. This is an active function that the assembly is capable to perform from any of several positions, such as for example 1, 2, 3, 4, 5, 6, N (neutral) or R (reverse).

One example of an unsuitable shifting operation is when the user intends shifting to first gear when driving at high speed. The user is then alerted about the intended gearshift operation in the sense that such an operation is not easy to be performed. At this time, the user has the following options: leaving the gearshift lever 2 in the current position, trying to shift into a nearby shift position that may be allowed by the assembly, or shifting into said unsuitable gear. While a decision is not being taken, the gearshift lever 2 could remain at the neutral position N.

In the event the user desires to shift into a gear considered by the assembly to be unsuitable, that operation can only be performed by the user by applying a force greater than a nominal value (that exerted usually in standard conditions) on the gearshift lever 2. This greater force may be, for example, of the order of greater than 20 kg, to the gearshift lever 2. In some cases and by applying this extra-force, an unsuitable gearshift operation would be allowed by the assembly. In this case, the force exerted by the first spring 7 will be overcome and the second spring 17 of the biasing means would start acting against said extra-force exerted by the user who desires to shift into such an unsuitable gear.

The above situation, in which the user decides to shift into a gear despite it has been detected by the assembly as an unsuitable gear, probably lasts longer than a normal, suitable gearshift situation. In this abnormal, unsuitable situation the gearshift lever 2 and the vehicle gearbox become phase shifted to each other, that is, in mutually different positions. Since this may lead to a dynamic confusion to the user, auxiliary biasing means may be provided which may consist of two torsion springs 18 associated with both axes XY of the gearshift lever crosspiece 2a which are prevented from being moved through pins 20. Such auxiliary biasing means 18, in this situation, freely act on the gearshift lever 2 and the first spring load 7 is released such that force of the lever tip 4 on the contoured surface 5 is decreased. As the user's hand releases the gearshift lever 2 away, the lever will not remain fixed in a stable position but it will be unstable which will be felt by the driver, with the gearshift lever 2 being brought back into the neutral position N (e.g. between 3rd and 4th gear), with the assembly waiting for an user's rectification of the shifting operation. The gearshift lever 2 is then moved back to said N position when the second spring 17 is overcome and the user's hand has been already released from the gearshift lever 2. This involves that, for the user to shift into a gear considered as an unsuitable gear, the gearshift lever 2 has to be kept at all times in said unsuitable position, when for example in an emergency situation.

Control means may be further included for sensing and processing an user gear shift intention. Such control means are capable of determining, from said user's sensed intention, whether the shifting operation to be performed is to be allowed or otherwise inform the user about an unsuitable shifting operation by acting through the actuation means 10 on the gearshift lever 2 for varying the force imparted thereto on the contoured surface 5 such that the shifting operation is allowed, blocked or hard to perform depending on the circumstances. In one embodiment, said control means comprise a transmission control unit (TCU) (not shown) and 12-bit accuracy cartesian XY sensing means 11, 12. The sensing means 11, 12 comprise corresponding magnets coupled to respective electronic boards 13, 14 arranged inside the main housing 1. Magnets 11, 12 are suitable for real time detecting magnetic field variations for determining fist spring load variations and the gearshift lever position at every time by using a cartesian map. This makes possible the user's intentions to be quickly detected such that the TCU can take the correct decision for suggesting the user about the most suitable shifting operation according to environmental and dynamic vehicle conditions. The way of suggestion of the TCU is by allowing, blocking or making the shifting operation harder to perform so that the user is informed about her/his gearshift decision.

In the embodiment herein described, haptic means are provided cooperating with the actuation means 10. The haptic means are adapted for informing the user that an unsuitable shifting operation is intended to be carried out. In this non limiting example, the haptic means comprise force feedback means and are operated with the same actuation means 10. Haptic signals are sent to the gearshift lever 2 in the form of vibrations to inform the user. This haptic information can be modeled according to the type of driving through means for real time adjusting the first spring load. Adjusting the first spring load can be carried out for example through a selector switch, or according to a user profile stored on a card.

The TCU may be provided with several preset spring loads for each gearshift operation depending on, for example, the type of driving (urban, sport, economic -low CO₂ emission-, comfortable, etc). This can be set by the user either through the provision of means for real time varying the first spring load (e.g. a selector switch -not shown-) which can be easily operated by the user or a user profile stored on a card. For example, when in an eco mode, the user is suggested to use high gears (said high gears are caused to be more easily changed than short gears) for preventing the engine from running at high revolutions.

The assembly of the invention is capable of continuously detecting at all times the gearshift lever position for determining the user's intentions and electronically transmitting the information to the TCU to give the user's with the appropriate suggestions about the most suitable shifting operation to be carried out for the present circumstances creating a different shifting feeling to the user for each operation.

## Claims

1. Shift-by-wire gearshift assembly comprising a gearshift lever (2) operable by a user for remotely controlling a motor vehicle transmission, biasing means (7, 17) adapted to impart a force to the gearshift lever (2) on a contoured surface (5) for providing the user with haptic information relating to shifting operation, and at least one actuation means (10) for varying the force imparted by the biasing means (7, 17) to the gearshift lever (2) from any gearshift lever position in such a way that the haptic information provided to the user can be different according to the circumstances, (**characterized in that** the biasing means (7, 17) comprise at least one first spring (7, 17) provided between two axially arranged portions (8, 9) of the gearshift lever (2) and a second spring (17) having a higher spring constant than that of the first spring (7).

2. Shift-by-wire gearshift assembly as claimed in claim 1, wherein the force imparted by the biasing means (7, 17) to the gearshift lever may be varied by said actuation means (10) such that a gear is at least substantially prevented from being shifted from any gearshift lever position.

3. Shift-by-wire gearshift assembly as claimed in claim 1 or claim 2, wherein the actuation means (10) are adapted for varying in an adjustable manner the force imparted by the biasing means (7, 17).

4. Shift-by-wire gearshift assembly as claimed in any of the preceding claims, wherein it further includes control means adapted for sensing and processing a user gearshift intention and determining, from said sensed intention, whether the operation to be performed through the gearshift lever (2) is to be allowed or otherwise inform the user about an unsuitable operation by acting through the actuation means (10) on the gearshift lever (2) for varying the force imparted thereto against the contoured surface (5).

5. Shift-by-wire gearshift assembly as claimed in any of the preceding claims, wherein said actuation means (10) are received inside the gearshift lever (2).

6. Shift-by-wire gearshift assembly as claimed in any of the preceding claims, wherein the actuation means (10) comprise a worm screw (8) and motor means (10a) for rotating said worm screw (8) thus causing the first spring load to be varied.

7. Shift-by-wire gearshift assembly as claimed in claim 6, wherein the motor means comprise a DC electric motor (10a).

8. Shift-by-wire gearshift assembly as claimed in any of the preceding claims, wherein said actuation means (10) are arranged at least substantially parallel to the gearshift lever (2).

9. Shift-by-wire gearshift assembly as claimed in any of the preceding claims, wherein it further comprises haptic means cooperating with said actuation means (10) for warning the user of an unsuitable shifting operation.

10. Shift-by-wire gearshift assembly as claimed in claim 9, wherein the haptic means comprise force feedback means.

11. Shift-by-wire gearshift assembly as claimed in any of the preceding claims, wherein it further comprises means for real time adjusting the first spring load.

12. Shift-by-wire gearshift assembly as claimed in any of the preceding claims, wherein it comprises one actuation means (10).

## Patentansprüche

1. Shift-by-wire-Schaltsystem bestehend aus einem Schalthebel (2), der dem Anwender zur Fernkontrolle der Kraftübertragung bei Motorfahrzeugen dient, einem Vorspannmittel (7, 17), angepasst um eine auf den Schalthebel (2) einwirkende Kraft auf eine konturierte Oberfläche (5) zu übertragen und dem Anwender haptische Informationen bezüglich des Schaltvorgangs zu übermitteln, sowie wenigstens einem Schaltknauf (10), um die vom Vorspannmittel (7, 17) auf den Schalthebel (2) übertragene Kraft in jedweder Schalthebelstellung zu variieren, so dass sich die an den Anwender übermittelte haptische Information gemäß den Umständen unterscheidet und sich **dadurch kennzeichnet, dass** das Vorspannmittel (7, 17) aus mindestens einer ersten Feder (7, 17) zwischen zwei axial angeordneten Teilbereichen (8, 9) des Schalthebels (2) und einer zweiten Feder (17), deren Federkonstante höher ist als die der ersten Feder (7), besteht.

2. Shift-by-wire-Schaltsystem nach Anspruch 1 beschrieben, wobei die durch das Vorspannmittel (7, 17) auf den Schalthebel übertragene Kraft über den Schaltknauf (10) variiert werden kann, so dass wenigsten grundsätzlich verhindert wird, dass ein Gang aus jedweder Hebelstellung geschaltet werden kann.

3. Shift-by-wire-Schaltsystem nach Anspruch 1 oder 2 beschrieben, wobei der Schaltknauf (10) so angepasst ist, dass die vom Vorspannmittel (7, 17) übertragene Kraft justierbar variiert werden kann.

4. Shift-by-wire-Schaltsystem nach einem der vorstehenden Ansprüche, das zusätzlich eine Steuerung beinhaltet, die die Schaltabsicht des Anwenders erkennt und verarbeitet sowie anhand der erkannten Schaltabsicht festlegt, ob der mittels Schalthebel (2) auszuführende Vorgang zulässig ist bzw. den Anwender über den Schaltknauf (10) am Schalthebel (2) zum Variieren der auf die konturierte Oberfläche (5) übertragenen Kraft über einen unzulässigen Vorgang zu informieren.

5. Shift-by-wire-Schaltsystem nach einem der vorstehenden Ansprüche, wobei der Schaltknauf (10) in den Schalthebel (2) integriert ist.

6. Shift-by-wire-Schaltsystem nach einem der vorstehenden Ansprüche, wobei der Schaltknauf (10) aus einer Spindel (8) und einem Antrieb (10a) zum Drehen der Spindel (8) besteht, wodurch die Last der ersten Feder variiert werden kann.

7. Shift-by-wire-Schaltsystem nach Anspruch 6, wobei der Antrieb einen Gleichstrom-Elektromotor (10a) beinhaltet.

8. Shift-by-wire-Schaltsystem nach einem der vorstehenden Ansprüche, wobei der Schaltknauf (10) wenigstens grundsätzlich parallel zum Schalthebel (2) angeordnet ist.

9. Shift-by-wire-Schaltsystem nach einem der vorstehenden Ansprüche, wobei zusätzlich die Haptik mit dem Schaltknauf (10) zusammenarbeitet, um den Anwender über unzulässige Schaltvorgänge zu warnen.

10. Shift-by-wire-Schaltsystem nach Anspruch 9, wobei die Haptik eine Rückkopplungseinrichtung bezüglich der Kraft beinhaltet.

11. Shift-by-wire-Schaltsystem nach einem der vorstehenden Ansprüche, das darüber hinaus Vorrichtungen beinhaltet, mit denen die Last der ersten Feder in Echtzeit eingestellt wird.

12. Shift-by-wire-Schaltsystem nach einem der vorstehenden Ansprüche, das einen Schaltknauf (10) beinhaltet.

## Revendications

1. Système de changement de vitesse à commande électrique comprenant un levier de changement de vitesse (2) permettant à un utilisateur de commander à distance la transmission d'un véhicule à moteur, des moyens de précontrainte (7, 17) adaptés pour communiquer une force au levier de changement de vitesse (2) sur une surface sinueuse (5) pour fournir à l'utilisateur des informations sensitives relatives à l'opération de changement de vitesse, et au moins un moyen d'actionnement (10) destiné à faire varier la force communiquée par les moyens de précontrainte (7, 17) au levier de changement de vitesse (2) à partir de n'importe quelle position du levier de changement de vitesse d'une manière telle que les informations sensitives fournies à l'utilisateur peuvent être différentes selon les circonstances, **caractérisé en ce que** les moyens de précontrainte (7, 17) comprennent au moins un premier ressort (7, 17) fourni entre deux parties disposées en sens axial (8, 9) du levier de changement de vitesse (2) et un second ressort (17) ayant une constante de ressort plus élevée que celle du premier ressort (7).

2. Système de changement de vitesse à commande électrique selon la revendication 1, dans lequel la force communiquée par les moyens de précontrainte (7, 17) au levier de changement de vitesse peut être variée par lesdits moyens d'actionnement (10) de telle sorte qu'une vitesse est au moins sensiblement empêchée d'être passée à partir de n'importe quelle position du levier de changement de vitesse.

3. Système de changement de vitesse à commande électrique selon la revendication 1 ou la revendication 2, dans lequel le moyen d'actionnement (10) est adapté pour faire varier d'une manière réglable la force communiquée par les moyens de précontrainte (7, 17).

4. Système de changement de vitesse à commande électrique selon l'une quelconque des revendications précédentes, qui comprend en outre des moyens de commande adaptés pour détecter et traiter une intention de changement de vitesse de l'utilisateur et déterminer, à partir de ladite intention détectée, si l'opération à exécuter via le levier de changement de vitesse (2) doit être autorisée, ou autrement informer l'utilisateur au sujet de l'opération inappropriée en agissant via les moyens d'actionnement (10) sur le levier de changement de vitesse (2) pour faire varier la force communiquée à celui-ci contre la surface sinueuse (5).

5. Système de changement de vitesse à commande électrique selon l'une quelconque des revendications précédentes, dans lequel ledit moyen d'actionnement (10) est reçu à l'intérieur du levier de changement de vitesse (2).

6. Système de changement de vitesse à commande électrique selon l'une quelconque des revendications précédentes, dans lequel le moyen d'actionnement (10) comprennent une vis sans fin (8) et des moyens formant moteur (10a) pour faire tourner ladite vis sans fin (8) faisant ainsi en sorte que la charge du premier ressort soit variée.

7. Système de changement de vitesse à commande électrique selon la revendication 6, dans lequel les moyens formant moteur comprennent un moteur électrique à courant continu (10a).

8. Système de changement de vitesse à commande électrique selon l'une quelconque des revendications précédentes, dans lequel lesdits moyens d'actionnement (10) sont disposés au moins sensiblement parallèles au levier de changement de vitesse (2).

9. Système de changement de vitesse à commande électrique selon l'une quelconque des revendications précédentes, qui comprend en outre des moyens sensitifs coopérant avec lesdits moyens d'actionnement (10) pour prévenir l'utilisateur d'une opération de changement de vitesse inappropriée.

10. Système de changement de vitesse à commande électrique selon la revendication 9, dans lequel les moyens sensitifs comprennent des moyens à retour de force.

11. Système de changement de vitesse à commande électrique selon l'une quelconque des revendications précédentes, qui comprend en outre des moyens pour ajuster en temps réel la charge du premier ressort.

12. Système de changement de vitesse à commande électrique selon l'une quelconque des revendications précédentes, qui comprend un moyen d'actionnement (10).
